# EUROPÄISCHE PATENTSCHRIFT

(11) **EP 1 632 652 B1**
(45) Veröffentlichungstag und Bekanntmachung des Hinweises auf die Patenterteilung: **14.03.2007**
(21) Anmeldenummer: 05450141.6
(22) Anmeldetag: 25.08.2005
(51) Int. Cl.: F01L 1/047, F01M 13/00

(54) **Brennkraftmaschine mit zumindest einer mindenstens einen Entlüftungskanal aufweisenden Nockenwelle**
Internal combustion engine with at least one camshaft having at least one venting passage
Moteur à combustion interne avec au moins un arbre à cames avec au moins un conduit d'aération

(30) Priorität: 02.09.2004 AT 14702004
(43) Veröffentlichungstag der Anmeldung: 08.03.2006
(73) Patentinhaber: AVL List GmbH, 8020 Graz (AT)
(72) Erfinder: Laimböck, Franz, 8051 Thal (AT); Graf, Bernhard, 8614 Breitenau (AT)
(74) Vertreter: Babeluk, Michael

(56) Entgegenhaltungen:
- WO-A-99/02824
- US-A- 4 651 704
- US-A- 5 711 264
- US-A- 5 954 035
- US-A- 6 109 250
- US-A1- 2002 083 933
- US-B1- 6 584 964
- PATENT ABSTRACTS OF JAPAN Bd. 015, Nr. 393 (M-1165), 4. Oktober 1991 (1991-10-04) & JP 03 160107 A (HONDA MOTOR CO LTD), 10. Juli 1991 (1991-07-10)
- PATENT ABSTRACTS OF JAPAN Bd. 2002, Nr. 08, 5. August 2002 (2002-08-05) & JP 2002 122012 A (FUJI HEAVY IND LTD), 26. April 2002 (2002-04-26)

## Beschreibung

Die Erfindung betrifft eine Brennkraftmaschine mit zumindest einer mindestens einen Entlüftungskanal aufweisenden Nockenwelle zur Entlüftung eines Nockenwellengehäuses.

Bei Brennkraftmaschinen deren Kurbelgehäuse über eine Kurbelgehäuseentlüftungsleitung mit einem Nockenwellengehäuse verbunden ist, ist eine Nockenwellengehäuseentlüftung erforderlich. Diese erfolgt entweder in einer Ansaugleitung oder - über einen Ölabscheider - ins Freie. Bei Brennkraftmaschinen für Arbeitsgeräte ergibt sich dabei der Nachteil, dass nicht ausgeschlossen werden kann, dass bei transportbedingtem Neigen des Gerätes Öl durch die Nockenwellengehäuseentlüftung austritt.

Die WO 99/02824 zeigt ein durch eine Brennkraftmaschine angetriebenes Arbeitsgerät, wobei das Kurbelgehäuse über eine Entlüftungsleitung mit dem Nockenwellengehäuse verbunden ist. Das Nockenwellengehäuse weist eine Entlüftungsöffnung mit einer Ölabscheideeinrichtung auf.

Die US 4,651,704 A und die US 6,502,565 B2 beschreiben Brennkraftmaschinen mit hohl ausgeführten Nockenwellen, wobei der Entlüftungskanal zur Entlüftung des Nockenwellengehäuses innerhalb der Nockenwelle angeordnet ist.

Dekompressionseinrichtung dienen dazu, den Verdichtungsdruck bei Brennkraftmaschinen während der Starphase zu vermindern, um die aufzubringende Startleistung zu reduzieren.

Die JP 2002-122012 A und die US 5,711,264 A offenbaren Dekompressionseinrichtungen mit jeweils einem Fliehgewicht, welches ein in einer Ausnehmung eines Nockens angeordnetes Dekompressionselement verdrehen kann. Bei geringer Drehzahl überragt ein Vorsprung des Dekompressionselementes den Grundkreis des Nockens, so dass eine Dekompression des Zylinders erfolgt. Bei höherer Drehzahl bewirkt eine Auslenkung, dass der Vorsprung des Dekompressionselemente zur Gänze innerhalb des Grundkreises gedreht wird.

Aufgabe der Erfindung ist es, die genannten Nachteile zu vermeiden und Ölleckagen bei abgestellter Brennkraftmaschine auf möglichst einfache Weise zu verhindern.

Erfindungsgemäß wird dies dadurch erreicht, dass der Entlüftungskanal durch ein fliehgewichtgesteuertes Verschlussorgan bei Motorstillstand verschlossen wird.

Vorzugsweise ist vorgesehen, dass das Abschaltorgan in eine vorzugseise zumindest ein Fliehgewicht aufweisende Dekompressionseinrichtung integriert ist. Besonders vorteilhaft ist es, wenn das Fliehgewicht ein Verschlusselement des Abschaltorgans ausbildet, welches im Stillstand der Nockenwelle einen vorzugsweise nockenwellenfesten Entlüftungskanal verschließt, wobei vorzugsweise der durch das Abschaltorgan verschließbare Abschnitt des Entlüftungskanasl radial bezüglich der Nockenwellenachse angeordnet ist.

Das Fliehgewicht kann dabei vorteilhafterweise mit einem Dekompressionselement der Dekompressionseinrichtung im Bereich des Grundkreises eines Nockens so zusammenwirken, dass das Dekompressionselement im Stillstand der Nockenwelle den Grundkreis überragt.

In einer sehr kompakten Ausführungsvariante ist vorgesehen, dass der durch das Abschaltorgan verschließbare Abschnitt des Entlüftungskanals in einem mit der Nockenwelle fest verbundenen Steuerrad eingeformt ist.

In einer besonders kompakten Ausführungsvariante der Erfindung ist vorgesehen, dass das Fliehgewicht am Steuerrad drehbar gelagert ist.

In weiterer Ausführung der Erfindung kann vorgesehen sein, dass das Dekompressionselement einen drehbar in einer Ausnehmung des Nockens gelagerten Zapfen aufweist, wobei die Drehachse des Zapfens etwa parallel zur Nockenwellenachse verläuft, und wobei der Zapfen im Querschnitt die Form eines Kreissegmentes mit einem Öffnungswinkel > 180°, vorzugsweise zwischen 200° und 240°, aufweisen kann.

Um eine besonders einfache Betätigung zu ermöglichen, ist weiters vorgesehen, dass der Zapfen durch das Fliehgewicht verdrehbar ist, wobei vorzugsweise mit dem Zapfen ein Betätigungshebel verbunden ist, an welchen das Fliehgewicht angreift, wobei vorzugsweise Fliehgewicht und Betätigungshebel über einen vorzugsweise in einem Langloch oder eine Gabel geführten Betätigungsstift miteinander verbunden sind.

Um einen öldichten Verschluss der Öffnung des Entlüftungskanals zu erreichen ist es vorteilhaft, wenn im Bereich des Ventilsitzes des Verschlussorgans ein elastisches Dichtungselement angeordnet ist, welches vorzugsweise durch eine Gummierung am Verschlussteil und/oder um die Öffnung des Entlüftungskanals gebildet ist.

Die Erfindung wird im Folgenden anhand der Figuren näher erläutert. Es zeigen:
- Fig. 1: eine Dekompressionseinrichtung der erfindungsgemäßen Brennkraftmaschine bei Stillstand des Motors;
- Fig. 2: ein Steuerrad in einem Schnitt gemäß der Linie II-II in Fig. 1;
- Fig. 3: die Dekompressionseinrichtung im Motorbetrieb;
- Fig. 4: das Steuerrad in einem Schnitt gemäß der Linie IV-IV in Fig. 3; und
- Fig. 5: einen Nocken im Schnitt gemäß dem Detail V in Fig. 3.

Am Steuerrad 1 einer Nockenwelle 2 ist eine Dekompressionseinrichtung 3 angeordnet. Die Dekompressionseinrichtung 3 weist ein als Hebel ausgebildetes Fliehgewicht 4 auf, welches exzentrisch am Steuerrad 1 um eine Achse 15 drehbar gelagert ist. Das Steuerrad 1 kann eine Riemenscheibe oder ein Zahnrad sein. Das Fliehgewicht 4 greift mit seinem gabelartigen Hebelende 5 an einem Betätigungsstift 6 eines Betätigungshebels 7 an, welcher mittels eines Zapfens 8 in einer Ausnehmung 9 des Nockens 2b der Nockenwelle 2 schwenkbar gelagert ist. Der Betätigungsstift 6 ist dabei in der Gabel 5a des Hebelendes 5 geführt. Die Drehachse 8a des Zapfens 8 ist etwa parallel zur Kurbelwellenachse 2a angeordnet.

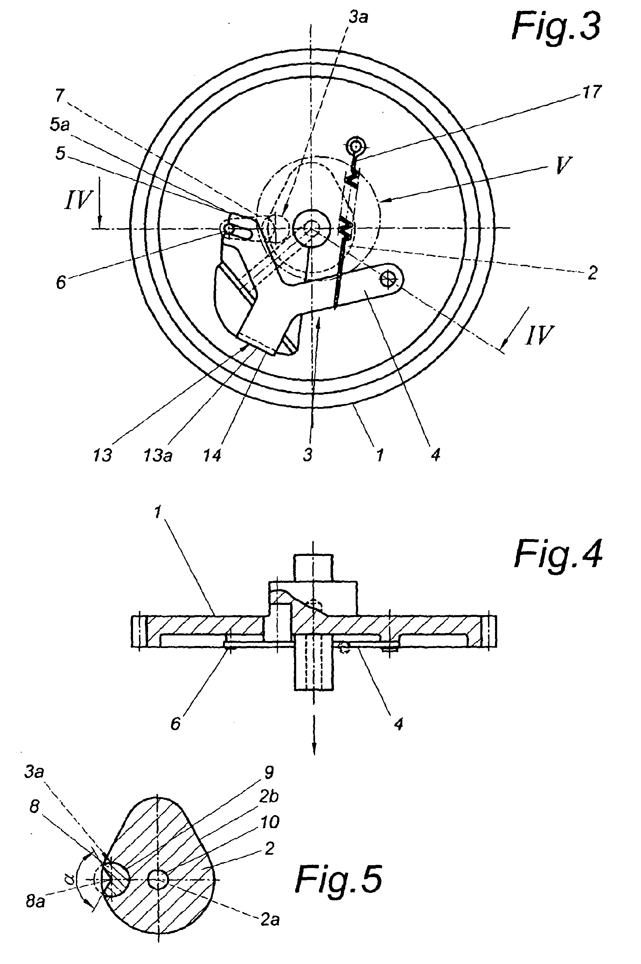

Der Zapfen 8 weist im Querschnitt die Form eines Kreissegmentes mit einem Öffnungswinkel α>180°, beispielsweise zwischen 200° und 240°, auf, wie in Fig. 5 ersichtlich ist, und bildet das eigentliche, einen Dekompressionshub eines Gaswechselventils bewirkende, Dekompressionselement 3a.

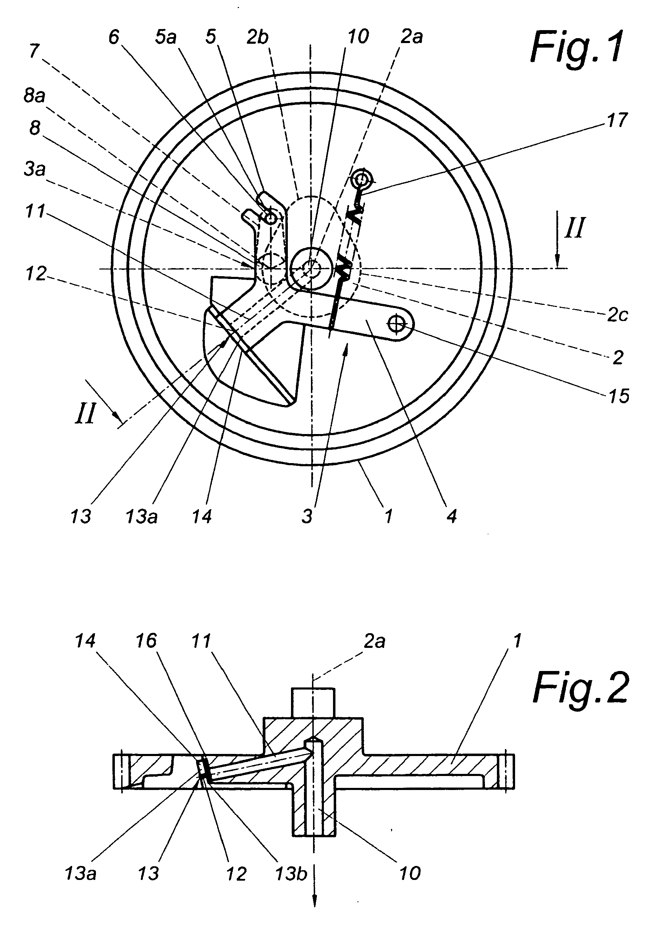

Bei dem in Fig. 1 dargestellten Stillstand der Brennkraftmaschine wird das Fliehgewicht 4 durch die Rückstellfeder 17 in seine eingezeichnete Ruhestellung gebracht, wobei der Zapfen 8 so verdreht wird, dass ein Teil des Zapfens 8 über den Grundkreis 2c des Nockens 2b hinausragt. Wird die Brennkraftmaschine in Betrieb genommen, so wird das mit der Nockenwelle 2 umlaufende Fliehgewicht 4 entgegen der Kraft der Rückstellfeder 17 nach außen abgelenkt, wodurch der Zapfen in die in Fig. 3 dargestellte Stellung verdreht wird, so dass der Zapfen 8 zur Gänze innerhalb des Grundkreises 2c zu liegen kommt, wodurch eine zusätzliche Erhebung des Auslassventils im Bereich des Grundkreises 2c vermieden wird.

Die Nockenwelle 2 ist im Ausführungsbeispiel hohl ausgeführt und weist einen, sich im Steuerrad 1 fortsetzenden, axialen Entlüftungskanal 10 auf, der mit einem radialen Entlüftungskanal 11 im Bereich des Steuerrades 1 in Verbindung steht. Gemäß der Erfindung wird die Öffnung 12 des radialen Entlüftungskanals 11 durch ein Verschlussorgan 13 in der Ruhestellung der Brennkraftmaschine verschlossen, wobei das Verschlussorgan 13 in Abhängigkeit der Drehzahl der Nockenwelle 2 selbsttätig betätigt wird. Das Verschlussorgan 13 ist dabei als Teil der Dekompressionseinrichtung 3 ausgebildet. Dabei ist es besonders vorteilhaft, wenn ein Verschlusselement 13a des Verschlussorgans 13 einteilig mit dem Fliehgewicht 4 gestaltet und im konkreten Ausführungsbeispiel durch einen abgewinkelten Hebelteil 14 des Fliehgewichtes 4 geformt ist. Das Verschlusselement 13a wird in der Ruhestellung des Fliehgewichtes 4 gegen die Öffnung 12 des radialen Entlüftungskanals 11 gedrückt, wie in Fig. 1 erkennbar ist. Im Motorbetrieb wird das Verschlusselement 13a durch das Fliehgewicht 4 ausgelenkt, wobei die Öffnung 12 des radialen Entlüftungskanals 11 freigegeben wird, wie Fig. 3 zeigt. Um einen öldichten Verschluss der Öffnung 12 zu erreichen, kann im Bereich des Ventilsitzes 13b des Verschlussorgans 13 ein Dichtungselement 16 angeordnet sein. Das Dichtungselement 16 kann durch eine aufvulkanisierte Gummierung am Verschlussteil 13a oder um die Öffnung 12 gebildet sein.

Dadurch, dass das Verschlussorgan 13 in die Dekompressionseinrichtung 3 integriert ist, können Teile eingespart und eine sehr kompakte Bauweise erzielt werden. Durch das Verschlussorgan 13 kann die abgestellte Brennkraftmaschine in beliebigen Lagen transportiert werden, ohne dass Ölleckagen aus dem Entlüftungskanal 10, 11 austreten.

## Patentansprüche

1. Brennkraftmaschine mit zumindest einer mindestens einen Entlüftungskanal (10, 11) aufweisenden Nockenwelle (2) zur Entlüftung eines Nockenwellengehäuses, **dadurch gekennzeichnet, dass** der Entlüftungskanal (11) durch ein fliehgewichtgesteuertes Verschlussorgan (13) bei Motorstillstand verschlossen wird.

2. Brennkraftmaschine nach Anspruch 1, **dadurch gekennzeichnet, dass** das Verschlussorgan (13) in eine zumindest ein Fliehgewicht (4) aufweisende Dekompressionseinrichtung (3) integriert ist.

3. Brennkraftmaschine nach Anspruch 1 oder 2, **dadurch gekennzeichnet, dass** das Fliehgewicht (4) ein Verschlusselement (13a) des Verschlussorgans (13) ausbildet, welches im Stillstand der Nockenwelle (2) einen vorzugsweise nockenwellenfesten Entlüftungskanal (11) verschließt.

4. Brennkraftmaschine nach Anspruch 2 oder 3, **dadurch gekennzeichnet, dass** das Fliehgewicht (4) mit einem Dekompressionselement (3a) im Bereich des Grundkreises (2c) eines Nockens (2b) so zusammenwirkt, dass das Dekompressionselement (3a) bei Stillstand der Nockenwelle (2) den Grundkreis (2c) überragt.

5. Brennkraftmaschine nach einem der Ansprüche 1 bis 4, **dadurch gekennzeichnet, dass** der durch das Verschlussorgan (13) verschließbare Abschnitt des Entlüftungskanal (11) radial bezüglich der Nockenwellenachse (2a) angeordnet ist.

6. Brennkraftmaschine nach einem der Ansprüche 1 bis 5, **dadurch gekennzeichnet, dass** der durch das Verschlussorgan (13) verschließbare Abschnitt des Entlüftungskanals (11) in einem mit der Nockenwelle (2) fest verbundenen Steuerrad (1) eingeformt ist.

7. Brennkraftmaschine nach einem der Ansprüche 1 bis 6, **dadurch gekennzeichnet, dass** das Fliehgewicht (4) am Steuerrad (1) drehbar gelagert ist.

8. Brennkraftmaschine nach einem der Ansprüche 4 bis 7, **dadurch gekennzeichnet, dass** das Dekompressionselement (3a) einen drehbar in einer Ausnehmung des Nockens (2b) gelagerten Zapfen (8) aufweist, wobei die Drehachse (8a) des Zapfens (8) etwa parallel zur Nockenwellenachse (2a) verläuft.

9. Brennkraftmaschine nach Anspruch 8, **dadurch gekennzeichnet, dass** der Zapfen (8) im Querschnitt die Form eines Kreissegments mit einem Öffnungswinkel (α) > 180°, vorzugsweise zwischen etwa 200° und 240° aufweist.

10. Brennkraftmaschine nach Anspruch 8 oder 9, **dadurch gekennzeichnet, dass** der Zapfen (8) durch das Fliehgewicht (4) verdrehbar ist, wobei vorzugsweise mit dem Zapfen (8) ein Betätigungshebel (7) verbunden ist, an welchen das Fliehgewicht (4) angreift.

11. Brennkraftmaschine nach Anspruch 10, **dadurch gekennzeichnet, dass** Fliehgewicht (4) und Betätigungshebel (7) über einen vorzugsweise in einem Langloch oder einer Gabel (5a) geführten Betätigungsstift (6) miteinander verbunden sind.

12. Brennkraftmaschine nach einem der Ansprüche 1 bis 11, **dadurch gekennzeichnet, dass** im Bereich des Ventilsitzes (13b) des Verschlussorgans (13) ein elastisches Dichtungselement (16) angeordnet ist, welches vorzugsweise durch eine Gummierung am Verschlussteil (13a) und/oder um die Öffnung (12) des Entlüftungskanals (11) gebildet ist.

## Claims

1. An internal combustion engine, comprising at least one camshaft (2) having a vent port (10, 11) for venting a camshaft housing, **characterized in that** the vent port (11) is closed off by a flyweight-controlled closing member (13) at standstill of the engine.

2. An internal combustion engine according to claim 1, **characterized in that** the closing member (13) is integrated in a decompression device (3) comprising at least one flyweight (4).

3. An internal combustion engine according to claim 1 or 2, **characterized in that** the flyweight (4) forms a closing element (13a) of the closing member (13) which at standstill of the camshaft (2) closes off a vent port (11) fixed to the camshaft.

4. An internal combustion engine according to claim 2 or 3, **characterized in that** the flyweight (4) cooperates with a decompression element (3a) in the area of the base circle (2c) of a cam (2b) in such a way that the decompression element (3a) protrudes beyond the base circle (2c) at standstill of the camshaft (2).

5. An internal combustion engine according to one of the claims 1 to 4, **characterized in that** the section of the vent port (11) which can be closed off by the closing member (13) is arranged in a radial manner relative to the camshaft axis (2a).

6. An internal combustion engine according to one of the claims 1 to 5, **characterized in that** the section of the vent port (11) which can be closed off by the closing member (13) is formed into a control wheel (1) rigidly connected with the camshaft (2).

7. An internal combustion engine according to one of the claims 1 to 6, **characterized in that** the flyweight (4) is rotatably held on the control wheel (1).

8. An internal combustion engine according to one of the claims 4 to 7, **characterized in that** the decompression element (3a) comprises a pin (8) rotatably held in a recess of the cam (2b), with the rotational axis (8a) of the pin (8) extending approximately parallel to the camshaft axis (2a).

9. An internal combustion engine according to claim 8, **characterized in that** the pin (8) has a cross section in the form of a segment of a circle with an opening angle (α) > 180°, preferably between approximately 200° and 240°.

10. An internal combustion engine according to claim 8 or 9, **characterized in that** the pin (8) can be twisted by the flyweight (4), with an actuating lever (7) preferably being joined with the pin (8) on which the flyweight (4) acts.

11. An internal combustion engine according to claim 10, **characterized in that** the flyweight (4) and the actuating lever (7) are mutually connected by means of an actuating pin (6) preferably guided in an oblong hole or a fork (5a).

12. An internal combustion engine according to one of the claims 1 to 11, **characterized in that** an elastic sealing element (16) is arranged in the area of the valve seat (13b) of the sealing member (13), which sealing element is preferably formed by a rubber film on the closing part (13a) and/or about the opening (12) of the vent port (11).

## Revendications

1. Moteur à combustion interne comportant au moins un arbre à cames (2) avec au moins un canal d'aération (10, 11) pour ventiler le carter d'arbre à cames,
**caractérisé en ce que**
le canal d'aération (11) est fermé à l'arrêt du moteur par un organe de fermeture (13) commandé par une masselotte centrifuge.

2. Moteur à combustion interne selon la revendication 1,
**caractérisé en ce que**
l'organe de fermeture (13) est intégré dans une installation de décompression (3) comportant au moins une masselotte centrifuge (4).

3. Moteur à combustion interne selon la revendication 1 ou 2,
**caractérisé en ce que**
la masselotte centrifuge (4) forme un élément de fermeture (13a) de l'organe de fermeture (13) qui, à l'arrêt de l'arbre à cames (2), ferme un canal d'aération (11), de préférence solidaire de l'arbre à cames.

4. Moteur à combustion interne selon la revendication 2 ou 3,
**caractérisé en ce que**
la masselotte centrifuge (4) coopère avec un élément de décompression (3a) au niveau du cercle primitif (2c) d'une came (2b) pour qu'à l'arrêt de l'arbre à cames (2); l'élément de décompression (3a) dépasse du cercle primitif (2c).

5. Moteur à combustion interne selon l'une des revendications 1 à 4,
**caractérisé en ce que**
le segment du canal d'aération (11) fermé par l'organe de fermeture (13) est installé radialement par rapport à l'axe de l'arbre à cames (2a).

6. Moteur à combustion interne selon l'une des revendications 1 à 5,
**caractérisé en ce que**
le segment du canal d'aération (11) fermé par l'organe d'obturation (13) est réalisé dans une roue de commande (1) solidaire de l'arbre à cames (2).

7. Moteur à combustion interne selon l'une des revendications 1 à 6,
**caractérisé en ce que**
la masselotte centrifuge (4) est montée à rotation sur la roue de commande (1).

8. Moteur à combustion interne selon l'une des revendications 4 à 7,
**caractérisé en ce que**
l'élément de décompression (3a) comporte un tourillon (8) tournant dans une cavité de la came (2b) et l'axe de rotation (8a) du tourillon (8) est sensiblement parallèle à l'axe de l'arbre à cames (2a).

9. Moteur à combustion interne selon la revendication 8,
**caractérisé en ce que**
le tourillon (8) a en coupe la forme d'un segment de cercle avec un angle d'ouverture (α) > 180° compris de préférence entre 200° et 240°.

10. Moteur à combustion interne selon la revendication 8 ou 9,
**caractérisé en ce que**
le tourillon (8) peut être tourné par la masselotte centrifuge (4) et un levier de manoeuvre (7) est de préférence relié au tourillon (8), la masselotte centrifuge (4) agissant sur ce levier.

11. Moteur à combustion interne selon la revendication 10,
**caractérisé en ce que**
la masselotte centrifuge (4) et le levier d'actionnement (7) sont reliés par une broche d'actionnement (6) guidée de préférence dans un trou oblong ou une fourchette (5a).

12. Moteur à combustion interne selon l'une des revendications 1 à 11,
**caractérisé par**
un élément d'étanchéité élastique (16) au niveau du siège de soupape (13b) de l'organe de fermeture (13), cet élément d'étanchéité étant formé de préférence par du caoutchouc prévu sur la pièce de fermeture (13a) et/ ou autour de l'ouverture (12) du canal d'aération (11).
